# EUROPÄISCHE PATENTSCHRIFT

(11) **EP 0 704 287 B1**
(45) Veröffentlichungstag und Bekanntmachung des Hinweises auf die Patenterteilung: **20.06.2001**
(21) Anmeldenummer: 95113602.7
(22) Anmeldetag: 30.08.1995
(51) Int. Cl.: B29B 15/10, B29C 70/30, B29C 70/06, E04B 1/74, B29C 43/32

(54) **Verfahren zur Herstellung eines Dämmelementes sowie ein Dämmelement**
Method for manufacturing a damping panel and panel made therefrom
Procédé pour la fabrication d'un panneau amortisseur ainsi que le panneau amortisseur en soi

(30) Priorität: 31.08.1994 DE 4430961
(43) Veröffentlichungstag der Anmeldung: 03.04.1996
(73) Patentinhaber: CWW-GERKO Akustik GmbH & Co. KG, 33611 Bielefeld (DE)
(72) Erfinder: Freist, Christoph, Dr.-Ing., 33613 Bielefeld (DE); Soethe, Hubert, Dr., 33104 Paderborn (DE)
(74) Vertreter: Stracke, Alexander, Dipl.-Ing.

(56) Entgegenhaltungen:
- EP-A- 0 223 450
- EP-A- 0 243 617
- JP-A- 3 120 036
- US-A- 3 865 661
- US-A- 5 145 626

## Beschreibung

Die Erfindung betrifft ein Verfahren zur Herstellung eines Dämmelements gemäß der im Oberbegriff des Patentanspruches 1 angegebenen Art.

Ein solches Verfahren ist schon seit langem bekannt und wird insbesondere zur Lärmminderung durch Dämmung und/oder akkustische Absorption in schwingenden Körpern, insbesondere Kraftfahrzeugen bzw. Teilen davon, eingesetzt. Ein Verfahren gemäß dem Oberbegriff des Anspruches 1 ist aus der US-PS 3 865 661 vorbekannt. Bei diesem Verfahren wird ein thermoplastisches Bindemittel mit einer Glasfiebermatte oder auch einer anderen Matte gemischt und anschließend erwärmt, damit die Glasfiebermatte von dem Bindemittel gebunden wird.

Ein derartiges Verfahren ist nur für einfache möglichst ebene Bauteile einsetzbar, nicht jedoch für Kraftfahrzeugteile mit einer geometrisch nicht genau definierbaren Form. Der Einsatz des vorbekannten Verfahrens für derartige Bauteile wäre mit einem hohen fertigungstechnischen Aufwand verbunden.

Aus der EP 0 243 617 A2 ist ein Verfahren zur Herstellung von faserverstärkten Bauteilen bekannt, unter anderem auch für Kraftfahrzeugteile. In einem ersten Verfahrensschritt werden die Komponenten mittels eines Förderers durch einen Ofen transportiert. Sie gelangen dann in eine zweiteilige Form, welche mit heißer Luft durchsetzt wird. Dadurch wird das Bindemittel geschmolzen und bindet die einzelnen Komponenten. Zur endgültigen Formgebung wird das gebildete Halbzeug dann mittels einer Preßvorrichtung endgültig geformt. Das Durchströmen mittels der Heißlufi oder des Heißluftgasstromes wird also bei diesem Verfahren vor der eigentlichen Formgebung durchgeführt. Die Verwendung von Formen ist äußerst aufwendig. Außerdem ist das Schmelzen von Bindemitteln vor der eigentlichen Formgebung nachteilig, da sich das geschmolzene Material bereits während der Formgebung abkühlt und außerdem ist das Einbringen von geschmolzenem Material einschließlich der gebundenen Komponenten mit einem hohen technischen Aufwand verbunden.

Ausgehend von einem durch die US-PS 3 865 661 vorbekannten Stand der Technik liegt der Erfindung die Aufgabe zugrunde, ein Verfahren gemäß der im Oberbegriff des Anspruches genannten Art vorzuschlagen, welches eine vereinfachte Herstellung der Bauteile ermöglicht, wobei die nach dem Verfahren hergestellten Bauteile eine verbesserte Dämmung und/oder eine verbesserte akkustische Absorption gewährleisten.

Die gestellte Aufgabe wird durch die Merkmale des Anspruches 1 gelöst.

Bei dem erfindungsgemäßen Verfahren werden zunächst keine Formen verwendet, sondern unterschiedliche Ringkanalsysteme mit auswählbaren Luftkreisläufen. Dabei wird zunächst in einem ersten Ringkanalsystem der abgewogene, in einem vorbestimmten Mischungsverhältnis eingebrachte Matrixwerkstoff so wie das Bindemittel gemischt. Anschließend wird in einem zweiten, gegenüber dem ersten vergrößerten Ringkanalsystem ein Halbzeug mittels einer Luftlegeeinheit erstellt. Daraufhin wird in einem dritten Ringkanalsystem das Halbzeug mittels einer Aktiviereinheit und eines Heißluftgasstromes erwärmt, so daß das Matrixmaterial durch das Bindemittel gebunden wird.

Zur endgültigen Formgebung wird dieses dann in einer Preßform in seine Endform überführt und gegebenenfalls auch zugeschnitten.

Als Matrixwerkstoff können elastische bzw. viskoelastische Werkstoffe verwendet werden. Dem Anspruch des Umweltschutzes wird dadurch Rechnung getragen, daß als Matrixwerkstoff und/oder als Bindemittel Recyclate verwendet werden. Den Matrixwerkstoff können Reißbaumwollfasern und Polyurethan-Schaumflocken bilden. Die Polyurethan-Schaumflocken weisen dabei vorzugsweise einen Durchmesser von 3 bis 8 mm auf. In Abhängigkeit einer gewünschten Temperatur-Formstabilität des Dämmelementes werden als Bindemittel thermoplastische Schmelzfasern, wie zum Beispiel Polyoliphine PE, PP oder ähnliches verwendet. Das Halbzeug weist insbesondere ein Mischungsverhältnis von 30 bis 85 Gewichtsprozenten Reißbaumwollfasern, 0 bis 50 Gewichtsprozenten Polyurethan-Schaumflocken und 15 bis 30 Gewichtsprozenten Bindemittel auf.

Gemäß einer anderen Ausführungsform der Erfindung kann als Matrixwerkstoff auch Gesteinswolle verwendet werden, wobei dann als Bindemittel Glasfaser oder Harz zum Einsatz kommt. Für bestimmte Anwendungsarten des Dämmelements ist es von Vorteil, daß mit dem Luftlegeverfahren Schutzmittel, insbesondere gegen Pilzbefall und/oder Pflanzschutzmittel, zugefügt werden. Vor allem die letztgenannten Pflanzschutzmittel verhindern beispielsweise bei einem Unfall des Kraftfahrzeugs mit Brandfolge eine unnötige Brandausweitung.

Wie bereits erwähnt wird das nach dem erfindungsgemäßen Verfahren hergestellte Bauteil grundsätzlich zur Dämmung wie auch zur akkustischen Absorption verwendet. Für die Dämmung ist das Dämmelement als Feder eines Federmassesystems ausgebildet.

Zweckmäßig ist es dafür, daß nach dem Luftlegeverfahren das Halbzeug aufgeschmolzen wird und zusammen mit mindestens einem für das Verformen erwärmten Masseelement des Federmassesystems sofort in der gekühlten Vorrichtung gepreßt und auf diese Weise das Halbzeug und das Masseelement miteinander verbunden werden. Als Masseelement kann dabei Schwerfolie und/oder glasfaserverstärktes Polypropylen verwendet werden.

Vor allem wenn als Masseelement glasfaserverstärktes Polypropylen verwendet wird, kann auch mit dem genannten Verfahren ein Masse-Absorber-System hergestellt werden. Dieses Masse-Absorber-System ist im Prinzip ein umgedrehtes Federmassesystem und wird in dem entsprechenden, bereits beschriebenen Verfahren wie beim Federmassesystem (Masseelement und Feder) hergestellt. In der Praxis hat sich herausgestellt, daß dieses Masse-Absorber-System insbesondere zur Bildung einer Motorkapsel Vorteile mit sich bringt. Zweckmäßigerweise wird dabei als Absorber Gesteinswolle verwendet. Die Herstellung und die Verformung zur Motorkapsel geschieht dabei entsprechend wie die Herstellung und Verformung beim Federmassesystem, wie noch nachfolgend eingehend erläutert wird.

Weitere Kennzeichen und Merkmale ergeben sich aus der nachfolgenden Beschreibung des Herstellungsverfahrens.

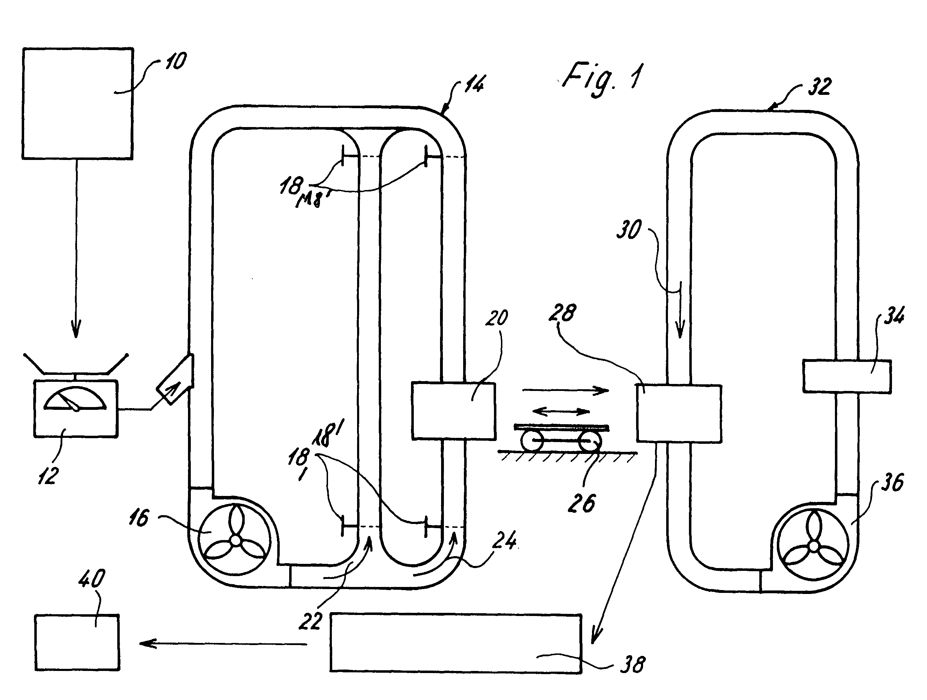

In der einzigen Figur 1 ist schematisch das Herstellungsverfahren eines Dämmelementes zur Lärmminderung durch Dämmung und/oder akkustischer Absorption schwingender Körper, insbesondere Kraftfahrzeuge bzw. Teile davon, dargestellt.

Das Rohmaterial wird in Behältern 10 gelagert und bedarfsweise einer Waage 12 zugeführt. In einem vorbestimmten Verhältnis wird das Rohmaterial in eine Luftlegevorrichtung 14 eingebracht. Das Rohmaterial besteht dabei aus Reißbaumwolle und Polyurethan-Schaumflocken als Matrixwerkstoff und Polyolefinen als Bindemittel für den eben genannten Matrixwerkstoff. Die Matrixwerkstoffe haben gegenüber dem Bindemittel eine höhere Schmelztemperatur, wobei das Bindemittel die Matrixwerkstoffe später bindet. Über die Waage 12 werden die Reißbaumwolle, die Polyurethan-Schaumflocken wie auch das Bindemittel in Form von Polyolefinen in einem vorbestimmten Verhältnis zueinander abgewogen und anschließend in die Luftlegevorrichtung eingebracht. Dabei wird 52 Gew.% Reißbaumwolle, 23 Gew.% Polyurethan-Schaumflocken und 25 Gew.% Polyethylen abgewogen und anschließend der Luftlegevorrichtung 14 zugeführt.

Die Luftlegevorrichtung 14 besteht aus einem Ringkanalsystem, das an eine Saug/Blaseinrichtung 16 angeschlossen ist. Über in dem Ringkanalsystem angeordnete Schieber 18, 18' ist es möglich, das Ringkanalsystem zu verkleinern beziehungsweise zu vergrößern. Es sind somit zwei unterschiedliche Kreisläufe möglich, nämlich ein Kreislauf in einem verkleinerten Ringkanalsystem und ein Kreislauf in einem vergrößerten Ringkanalsystem. In dem vergrößerten Ringkanalsystem ist die Luftlegeeinheit 20 angeordnet, wohingegen im verkleinerten Ringkanalsystem die Luftlegeeinheit 20 umgangen wird. Die unterschiedlichen Ringkanalsysteme mit den entsprechenden Luftkreisläufen sind für verschiedene Verfahrensabschnitte konzipiert.

In dem verkleinerten Ringkanalsystem wird der abgewogene, in einem vorbestimmten Mischungsverhältnis in die Luftlegevorrichtung 14 eingebrachte Matrixwerkstoff sowie das Bindemittel zunächst einmal gemischt, indem es entsprechend dem Pfeil 22 durch das verkleinerte Ringkanalsystem der Luftlegevorrichtung 14 gesaugt, bzw. geblasen wird. Dabei sind die in bezug auf die Figur linken Schieber 18 geöffnet und die rechten Schieber 18 geschlossen.

Die beiden Matrixwerkstoffe und das Bindemittel sind Recyclate und werden in dem verkleinerten Ringkanalsystem der Luftlegevorrichtung solange umgeblasen, bis eine gleichmäßige Verteilung der beiden Matrixwerkstoffe sowie des Bindemittels vorliegt.

Anschließend werden die linken Schieber 18 geschlossen und die rechten Schieber 18' geöffnet, so daß nunmehr das vergrößerte Ringkanalsystem wirksam ist.

Die Luftlegeeinheit 20 besteht aus einem Sieb mit in vorbestimmter Weise ausgebildeten siebartigen Öffnungen. Über die Öffnungen in dem Sieb wird der Luftstrom gesteuert und somit die Saugverhältnisse vor und nach dem Sieb bestimmt. Auf diese Weise werden unterschiedliche Wandungsdicken des in der Luftlegeeinheit erzeugten Halbzeugs erreicht.

Das herzustellende Dämmelement ist ein Formteil. In der Luftlegeeinheit 20 wird, wie eben erwähnt, das Halbzeug für das zu erstellende Formteil hergestellt. Das Halbzeug wird dabei als zweidimensionale Abwicklung des zu erstellenden dreidimensionalen Formteils in der Luftlegeeinheit 20 durch das Luftlegeverfahren gelegt. Dies geschieht durch die unterschiedlichen Öffnungen in dem Sieb in der Luftlegeeinheit 20, wodurch auch an vorbestimmten Stellen unterschiedliche Wandungsdicken entstehen. Weiterhin wird über die Sieböffnungen das Halbzeug so ausgelegt, daß das Dämmelement eine homogene Dichte erhält. Dies ist insbesondere im Hinblick auf die akustische Absorption des Luftschallpegels äußerst wichtig. Eine lokal definiert eingestellte Dichte des Dämmelements ist nämlich Voraussetzung für eine optimale akustische Absorption.

In der Luftlegeeinheit 20 wird somit das Sieb von unten mit den in der Luft verteilten Matrixwerkstoffen und dem Bindemittel angeströmt. Dies hat den Vorteil, daß die Schwerkraft beim Anströmen des Siebes im Hinblick auf die Verteilung des Matrixwerkstoffes und des Bindemittels keine Rolle spielt. Ausschlaggebend sind lediglich die Strömungsbedingungen am Sieb. Auf diese Weise wird also über das Anströmen der Matrixwerkstoff und das Bindemittel in vorbestimmter Weise gelegt. Die Strömung verläuft dabei entsprechend dem Pfeil 24 durch das vergrößerte Ringkanalsystem sowie durch die Luftlegeeinheit 20 mit dem hier nicht dargestellten Sieb.

Ist der Luftlegevorgang abgeschlossen, wird die Luftlegeeinheit 20 geöffnet, ein Transportwagen 26 oder ein Transportband als Teil einer Transporteinrichtung verfährt unter das Sieb und somit unter das Halbzeug und fährt dieses in eine Aktiviereinheit 28. In der Aktiviereinheit 28 wird das auf dem Sieb befindliche Halbzeug erwärmt, indem numehr ein Heißgasstrom entsprechend dem Pfeil 30 auf das Sieb und auf das Halbzeug aufgebracht wird. Dafür ist ein zweites Ringkanalsystem 32 mit einer Heizung 34 und einer Saug/Blaseinrichtung 36 vorgesehen. In der Aktiviereinheit 28 wird das Bindemittel unter dem Heißgasstrom aufgeschmolzen und somit der Matrixwerkstoff gebunden. Das erwärmte Halbzeug wird anschließend beispielsweise über eine Rutsche in eine Vorrichtung zum Pressen, Stanzen und/oder Zuschneiden, im Folgenden lediglich Preßvorrichtung 38 genannt, eingelegt. Während des Einlegens des Halbzeugs sowie in der Preßvorrichtung 38 wird das Halbzeug gekühlt, in seine Endform überführt und ggf. zugeschnitten. Das dadurch hergestellte Dämmelement hat dann eine homogene Dichte und wird gelagert bzw. versandt, was mit dem Bezugszeichen 40 dargestellt ist.

Das Dämmelement kann sowohl als akustischer Absorber als auch zur Dämmung zur Lärmminderung schwingender Körper verwendet werden. Dafür wird beispielsweise nach dem Luftlegeverfahren das Halbzeug in der beschriebenen Weise aufgeschmolzen und mit zumindest einer zum Verformen erwärmten, als Masseelement des Feder-Masse-Systems dienenden Schwerfolie sofort in der gekühlten Preßvorrichtung 38 gepreßt und auf diese Weise die Schwerfolie und das Halbzeug miteinander verbunden und zum Dämmelement geformt.

Als Material für das eben genannte Feder-Masse-System als auch für den Einsatz des Dämmelements als akustischer Absorber eigenen sich besonders die eingangs genannte Abmischung aus Reißbaumwolle und Polyurethan-Schaumflocken, die durch das Bindemittel thermoplastisch gebunden werden. Die Polyurethan-Schaumflocken weisen dabei vorzugsweise einen Durchmesser von 3 bis 8 mm auf und sind vorzugsweise mit einem Raumgewicht von 18 kg/ccm bis 50 kg/m versehen. Durch Variation der Prozentsätze der Matrixwerkstoffe - Polyurethan-Schaumflocken und Reißbaumwolle - auf der einen als auch des Bindemittels - Polyolefine - auf der anderen Seite kann Einfluß auf das E-Modul und den Verlustfaktor der Feder bzw. auf die akustische Absorption des als Absorber dienenden Dämmelements ausgeübt werden.

Grundsätzlich können als Matrixwerkstoff elastische bzw. viskoelastische Werkstoffe verwendet werden, die gegenüber dem Bindemittel eine höhere Schmelztemperatur aufweisen. In Abhängigkeit einer gewünschten Temperatur-Formstabilität des Dämmelements können als Bindemittel thermoplastische Schmelzfasern wie Polyethylen, Polypropylen o.ä. verwendet werden.

Weiterhin kann als Matrixwerkstoff Steinwolle, z. B. Basaltsteinwolle und als Bindemittel Glasfaser verwendet werden.

Ergänzt kann der Matrixwerkstoff wie auch das Bindemittel in der Luftlegevorrichtug 14 noch durch Schutzmittel, insbesondere gegen Pilzbefall und/oder Flammschutzmittel.

Ein weiterer Vorteil des erfindungsgemäßen Verfahrens ist, daß nicht alle Bestandteile des Dämmelements gleichzeitig in der Luftlegevorrichtung gelegt werden müssen. So kann z.B. durch Zugabe von thermoplastischen Schmelzfasern auf einen Teil des bereits gelegten Halbzeugs die Abriebfestigkeit der Oberfläche wesentlich erhöht werden. Auf gleiche Art und Weise können auch Dämmelemente bzw. deren Halbzeuge gelegt werden, die auch bei sehr hohen Temperature noch formstabil sind. Ein Beispiel hierfür ist die genannte Abmischung aus Basaltsteinwolle und Glasfasern, die dann durch Erhitzen des Materials bis an den Schmelzpunkt gebunden werden.

Die Erfindung zeichnet sich somit durch ihre einfachen Verfahrensschritte aus, durch die sich im Hinblick auf die Lärmminderung und auch im Hinblick auf die Eigenschaften des herzustellenden Dämmelements günstige Gestaltungsvariationen ergeben. Insbesondere in bezug auf die bei Kraftfahrzeugen immer stärker werdende Forderung nach Umweltverträglichkeit der Fahrzeugkompomenten ist es günstig, daß als Matrixwerkstoff und/oder als Bindemittel Recyclate verwendet werden. Daß auf diese Weise hergestellte Dämmelement kann dann ebenfalls wieder dem Recycling-Prozeß zugeführt werden.

### Bezugszeichenliste

- 10 -: Behälter
- 12 -: Waage
- 14 -: Luftlegevorrichtung
- 16 -: Saug/Blaseinrichtung
- 18 -: Schieber
- 20 -: Luftlegeeinheit
- 22 -: Pfeil
- 24 -: Pfeil
- 26 -: Transportwagen
- 28 -: Aktiviereinheit
- 30 -: Pfeil
- 32 -: Zweites Ringkanalsystem
- 34 -: Heizung
- 36 -: Saug/Blaseinrichtung
- 38 -: Preßvorrichtung
- 40 -: Lager/Versand

## Patentansprüche

1. Verfahren zur Herstellung eines Dämmelementes zur Lärmminderung, zur Dämmung und/oder akkustischer Absorption schwingender Körper, insbesondere Kraftfahrzeuge bzw. Teile davon, aus einem Bindemittel und einem Matrixwerkstoff, wobei das Bindemittel den Matrixwerkstoff mit einer gegenüber dem Bindemittel höheren Schmelztemperatur bindet, **dadurch gekennzeichnet, daß** in einem unterschiedlichen Ringkanalsystem mit auswählbaren Luftkreisläufen zunächst in einem ersten Ringkanalsystem der abgewogene, in einem vorbestimmten Mischungsverhältnis eingebrachte Matrixwerkstoff sowie das Bindemittel gemischt werden, das anschließend in einem zweiten, gegenüber dem ersten vergrößerten Ringkanalsystem ein Halbzeug mittels einer Luftlegeeinheit erstellt wird, das daraufhin in einem dritten Ringkanalsystem das Halbzeug mittels einer Aktiviereinheit (28) durch einen Heißluftgasstrom erwärmt wird, so daß das Matrixmaterial durch das Bindemittel gebunden wird, wobei nach dem Erwärmen des Halbzeuges dieses in einer Preßvorrichtung (38) in seine Endform überführt und gegebenenfalls zugeschnitten wird.

2. Verfahren nach Anspruch 1, **dadurch gekennzeichnet, daß** das Halbzeug während des Einlegens in die Preßvorrichtung (38) sowie darin gekühlt wird.

3. Verfahren nach Anspruch 1, **dadurch gekennzeichnet, daß** das Halbzeug in der Luftlegeeinheit (20) als zweidimensionale Abwicklung des zu erstellenden dreidimensionalen Formteiles gebildet wird.

4. Verfahren nach einem der vorhergehenden Ansprüche, **dadurch gekennzeichnet, daß** der Bereich der Preßvorrichtung (38), in den das Halbzeug eingelegt wird, vorher und/oder während des Bearbeitens des Halbzeugs in der Preßvorrichtung (38) gekühlt wird.

5. Verfahren nach Anspruch 3 oder 4, **dadurch gekennzeichnet, daß** das Halbzeug unmittelbar nach dem Aufschmelzen in den gekühlten Bereich eingelegt und gepreßt wird.

6. Verfahren nach einem der vorhergehenden Ansprüche, **dadurch gekennzeichnet, daß** das Dämmelement ein Formteil ist, das in der Preßvorrichtung (38) durch Pressen geformt wird.

7. Verfahren nach Anspruch 3, **dadurch gekennzeichnet, daß** das Halbzeug durch das Luftlegeverfahren an vorbestimmten Stellen unterschiedliche Wandungsdicken erhält.

8. Verfahren nach einem der Ansprüche 6 oder 7, **dadurch gekennzeichnet, daß** das Halbzeug durch das Luftlegeverfahren so gelegt wird, daß das Dämmelement eine lokal einstellbare, gegebenenfalls homogene Dichte erhält.

9. Verfahren nach einem der vorangehenden Ansprüche, **dadurch gekennzeichnet, daß** als Matrixwerkstoff weiche, elastische bzw. viskoelastische Werkstoffe verwendet werden.

10. Verfahren nach einem der vorangehenden Ansprüche, **dadurch gekennzeichnet, daß** als Matrixwerkstoff und/oder als Bindemittel Recyclate verwendet werden.

11. Verfahren nach Anspruch 10, **dadurch gekennzeichnet, daß** als Matrixwerkstoff Reißbaumwollfasern und Polyurethan-Schaumflocken verwendet werden.

12. Verfahren nach Anspruch 11, **dadurch gekennzeichnet, daß** die Polyurethan-Schaumflocken vorzugsweise einen Durchmesser von 3 bis 8 mm aufweisen.

13. Verfahren nach einem der Ansprüche 10 bis 12, **dadurch gekennzeichnet, daß** in Abhängigkeit einer gewünschten Temperaturformstabilität des Dämmelements als Bindemittel thermoplastische Schmelzfasern, wie die Polyolefine PE, PP oder ähnliches verwendet wird.

14. Verfahren nach einem der Ansprüche 10 bis 13, **dadurch gekennzeichnet, daß** das Halbzeug ein Mischungsverhältnis von 30 bis 85 Gewichtsprozenten Reißbaumwollfasern, 0 bis 50 Gewichtsprozenten Polyurethan-Schaumflocken und 15 bis 30 Gewichtsprozenten Bindemittel aufweist.

15. Verfahren nach einem der Ansprüche 1 bis 10, **dadurch gekennzeichnet, daß** als Matrixwerkstoff Gesteinswolle verwendet wird.

16. Verfahren nach einem der Ansprüche 1 bis 10 oder 15, **dadurch gekennzeichnet, daß** als Bindemittel Glasfasern oder Harz verwendet wird.

17. Verfahren nach einem der vorangehenden Ansprüche, **dadurch gekennzeichnet, daß** mit dem Luftlegeverfahren Schutzmittel, insbesondere gegen Pilzbefall und/oder Pflanzschutzmittel zugefügt werden.

18. Verfahren nach einem der vorangehenden Ansprüche, **dadurch gekennzeichnet, daß** das Dämmelement als Feder eines Feder-Masse-Systems verwendet wird.

19. Verfahren nach Anspruch 18, **dadurch gekennzeichnet, daß** nach dem Luftlegeverfahren das Halbzeug aufgeschmolzen wird und zusammen mit zumindest einem zum Verformen erwärmten Massenelement des Feder-Masse-Systems sofort in der gekühlten Preßvorrichtung (38) gepreßt und auf diese Weise miteinander verbunden werden.

20. Verfahren nach Anspruch 19, **dadurch gekennzeichnet, daß** als Masseelement Schwerfolie verwendet wird.

21. Verfahren nach Anspruch 19 oder 20, **dadurch gekennzeichnet, daß** als Masseelemente glasfaserverstärkter Polypropylen verwendet wird.

22. Verfahren nach einem der Ansprüche 19 bis 21, gekennzeichnet durch ein Masse-Absorber-System, wobei insbesondere als Absorber Gesteinswolle verwendet wird.

23. Verfahren nach Anspruch 22, **dadurch gekennzeichnet, daß** das Masse-Absorber-System im wesentlichen eine Motorkapsel bildet.

## Claims

1. Process for Producing an insulating element for noise reduction, for insulation and/or acoustic absorption in vibrating bodies, in particular motor vehicles or parts of these, made from a binder and from a matrix material, where the binder binds the matrix material whose melting point is higher than that of the binder, **characterized in that,** in a variably conformed ring-duct system with selectable air circuits, the weighed-out matrix material introduced in a predetermined mixing ratio and the binder are mixed in a first ring-duct system, and then, in a second ring-duct system enlarged in comparison with the first, a semifinished product is produced by way of an airlay unit, and then, in a third ring-duct system, the semifinished product is heated by way of an activating unit (28) by a gas stream of hot air, so that the matrix material is bonded by the binder, where after the semifinished product has been heated it is converted into its final form and, where appropriate, trimmed, in a pressure apparatus (38).

2. Process according to Claim 1, **characterized in that** the semifinished product is cooled during its placing into the pressure apparatus (38), and also therein.

3. Process according to Claim 1, **characterized in that** the semifinished product formed in the airlay unit (20) is a two-dimensional representation of the three-dimensional moulding to be produced.

4. Process according to any of the preceding claims, **characterized in that** that area of the pressure apparatus (38) into which the semifinished product is placed is cooled in advance and/or during the operations on the semifinished product in the pressure apparatus (38).

5. Process according to Claim 3 or 4, **characterized in that** the semifinished product is placed into the cooled area immediately after melting and is pressed.

6. Process according to any of the preceding claims, **characterized in that** the insulating element is a moulding which is moulded by pressing in the pressure apparatus (38).

7. Process according to Claim 3, **characterized in that** the airlay process gives the semifinished product various wall thicknesses at predetermined locations.

8. Process according to Claim 6 or 7, **characterized in that** the airlay lays the semifinished product in such a way that the density given to the insulating element is locally adjustable or, where appropriate, homogeneous.

9. Process according to any of the preceding claims, **characterized in that** the matrix material used comprises soft, elastic or viscoelastic materials.

10. Process according to any of the preceding claims, **characterized in that** recycled materials are used as matrix material and/or as binders.

11. Process according to Claim 10, **characterized in that** reclaimed cotton fibres and polyurethane foam flakes are used as matrix material.

12. Process according to Claim 11. **characterized in that** the polyurethane foam flakes preferably have a diameter of from 3 to 8 mm.

13. Process according to any of Claims 10 to 12, **characterized in that,** depending on the desired heat resistance of the insulating element, thermoplastic melt fibres, such as the polyolefins PE, PP, or the like are used as binders.

14. Process according to any of Claims 10 to 13, **characterized in that** the semifinished product has a mixing ratio of from 30 to 85 per cent by weight of reclaimed cotton fibres, from 0 to 50 per cent by weight of polyurethane foam flakes and from 15 to 30 per cent by weight of binders.

15. Process according to any of Claims 1 to 10, **characterized in that** rock wool is used as matrix material.

16. Process according to any of Claims 1 to 10 or 15, **characterized in that** the binders used comprise glass fibres or resin.

17. Process according to any of the preceding claims, **characterized in that** preservatives, in particular to counter fungal infestation, and/or flame retardants, are added using the airlay process.

18. Process according to any of the preceding claims, **characterized in that** the insulating element is used as a spring of a spring-mass system.

19. Process according to Claim 18, **characterized in that,** after the airlay process, the semifinished product is melted and, together with at least one spring-mass system mass element heated for shaping, immediately pressed in the cooled pressure apparatus (38) in such a way that these are bonded to one another.

20. Process according to Claim 19, **characterized in that** a heavy-gauge film is used as mass element.

21. Process according to Claim 19 or 20, **characterized in that** glass-fibre-reinforced polypropylene is used as mass element.

22. Process according to any of Claims 19 to 21, characterized by a mass-absorber system, where rock wool in particular is used as absorber.

23. Process according to Claim 22, **characterized in** that the mass-absorber system essentially forms an engine enclosure.

## Revendications

1. Procédé de fabrication d'un élément isolant pour réduire le bruit, pour isoler et/ou pour l'absorption acoustique de corps oscillants, notamment de véhicules automobiles ou de parties de ceux-ci, constitué d'un liant et d'une matière de matrice, le liant liant la matière de matrice qui présente une température de fusion supérieure à celle du liant, caractérisé en ce que dans un système différent de canaux annulaires avec des circuits d'air pouvant être sélectionnés, la matière de matrice pesée, introduite dans un rapport de mélange prédéterminé ainsi que le liant sont mélangés dans un premier système de canaux annulaires, en ce qu'ensuite dans un deuxième système de canaux annulaires, plus grand que le premier, il est réalisé un semi-produit au moyen d'une unité de mise en place à air, en ce qu'ensuite, dans un troisième système de canaux annulaires, le semi-produit est chauffé au moyen d'une unité d'activation (28) par un courant d'air chaud, ce qui fait que la matière de matrice est liée par le liant, après son échauffement, le semi-produit étant mis à sa forme définitive dans un dispositif à presse (38) et éventuellement coupé.

2. Procédé selon la revendication 1, caractérisé en ce que le semi-produit est refroidi pendant sa mise en place dans le dispositif à presse (38), ainsi que dans celui-ci.

3. Procédé selon la revendication 1, caractérisé en ce que le semi-produit est formé dans l'unité de mise en place à air (20) en tant que développement en deux dimensions de la pièce moulée en trois dimensions à réaliser.

4. Procédé selon l'une des revendications précédentes, caractérisé en ce que la zone du dispositif à presse (38) dans lequel le semi-produit est placé, est refroidi avant et/ou pendant le traitement du semi-produit dans le dispositif à presse (38).

5. Procédé selon la revendication 3 ou 4, caractérisé en ce que le semi-produit est mis en place et pressé dans la zone refroidie, immédiatement après fusion.

6. Procédé selon l'une des revendications précédentes, caractérisé en ce que l'élément isolant est une pièce moulée qui est moulée dans le dispositif à presse (38) par pressage.

7. Procédé selon la revendication 3, caractérisé en ce que le procédé de mise en place à air confère des épaisseurs de paroi différentes aux semi-produits, en des emplacements prédéterminés.

8. Procédé selon l'une des revendications 6 ou 7, caractérisé en ce que le semi-produit est mis en place par le procédé à air, de manière que l'élément isolant reçoive une densité réglable localement, éventuellement homogène.

9. Procédé selon l'une des revendications précédentes, caractérisé en ce qu'on utilise comme matière de matrice des matières souples, élastiques ou visco-élastiques.

10. Procédé selon l'une des revendications précédentes, caractérisé en ce qu'on utilise comme matière de matrice et/ou comme liant, des produits recyclés.

11. Procédé selon la revendication 10, caractérisé en ce que l'on utilise comme matière de matrice des fibres de coton effiloché et de la mousse de polyuréthanne.

12. Procédé selon la revendication 11, caractérisé en ce que les flocons de mousse de polyuréthanne présentent de préférence un diamètre de 3 à 8 mm.

13. Procédé selon l'une des revendications 10 à 12, caractérisé en ce qu'on utilise comme liant, en fonction d'une indéformabilité voulue à la température de l'élément isolant, des fibres thermoplastiques, telles que les polyoléfines PE, PP ou similaires.

14. Procédé selon l'une des revendications 10 à 13, caractérisé en ce que le semi-produit présente un rapport de mélange de 30 à 85 pour cent en poids de fibres de coton effiloché, de 0 à 50 pour cent en poids de flocons de mousse de polyuréthanne et de 15 à 30 pour cent en poids de liant.

15. Procédé selon l'une des revendications 1 à 10, caractérisé en ce qu'on utilise de la laine de roche comme matière de matrice.

16. Procédé selon l'une des revendications 1 à 10 ou 15, caractérisé en ce qu'on utilise des fibres de verre ou de la résine comme liant.

17. Procédé selon l'une des revendications précédentes, caractérisé en ce qu'avec le procédé de mise en forme à l'air, on ajoute des agents de protection, en particulier des fongicides et/ou des produits phytosanitaires.

18. Procédé selon l'une des revendications précédentes, caractérisé en ce que l'élément isolant est utilisé comme ressort d'un système ressort-masse.

19. Procédé selon la revendication 18, caractérisé en ce qu'après le procédé de mise en forme à l'air, le semi-produit est fondu et est pressé aussitôt avec au moins un élément de masse, chauffé pour le préformage, du système ressort-masse, dans le dispositif à presse 38 refroidi et ils sont ainsi reliés entre eux.

20. Procédé selon la revendication 19, caractérisé en ce qu'on utilise une feuille lourde comme élément de masse.

21. Procédé selon la revendication 19 ou 20, caractérisé en ce qu'on utilise du propylène renforcé aux fibres de verre comme éléments de masse.

22. Procédé selon l'une des revendications 19 à 21, caractérisé par un système masse-absorbeur, de la laine de roche étant utilisée en particulier comme absorbeur.

23. Procédé selon la revendication 22, caractérisé en ce que le système masse-absorbeur forme essentiellement un blindage de moteur.
